# NEUE EUROPÄISCHE PATENTSCHRIFT

(11) **EP 0 423 380 B2**
(45) Veröffentlichungstag und Bekanntmachung des Hinweises auf die Entscheidung über den Einspruch: **10.01.1996**
(45) Hinweis auf die Patenterteilung: 28.04.1993
(21) Anmeldenummer: 89119124.9
(22) Anmeldetag: 14.10.1989
(51) Int. Cl.: G01B 11/10

(54) **Vorrichtung zur Messung von Unregelmässigkeiten von Fäden**
Device to measure irregularities of threads
Dispositif pour la mesure des irrégularités des fils

(43) Veröffentlichungstag der Anmeldung: 24.04.1991
(73) Patentinhaber: BARCO AUTOMATION, NAAMLOZE VENNOOTSCHAP, B-8970 Poperinge (BE); W. SCHLAFHORST AG & CO., D-41061 Mönchengladbach (DE)
(72) Erfinder: de Vuyst, Marcel, B-8790 Waregem (BE); Goetsches, Peter, D-4050 Mönchengladbach 2 (DE)
(74) Vertreter: Hamann, Arndt, Dipl.-Ing.

(56) Entgegenhaltungen:
- EP-A- 0 322 470
- EP-A- 0 401 600
- EP-B- 0 078 255
- AU-B- 2 958 484
- CH-A- 636 323
- CH-A- 643 061
- DE-B- 2 040 084
- GB-A- 996 181
- US-A- 4 648 054
- USTER News Bulletin, Nr. 34, April 1987, Seiten 12-13

## Beschreibung

Die Erfindung betrifft eine Vorrichtung zum Messen von Unregelmäßigkeiten der Fäden aus textilen Fasern und Mischfasern an einer Textilmaschine mittels einer optoelektronischen Einrichtung, bei der ein zu prüfender Faden zwischen einem Lichtsender und einem Lichtempfänger in einem Meßschlitz angeordnet ist.

Die Qualität des gesponnenen Garnes wird an einem vorgegebenen Standard gemessen, der auf der Grundlage kapazitiver Meßmethoden gewonnen wurde. Deshalb sind Textilmaschinen in der Regel mit kapazitiv arbeitenden Meßsystemen ausgestattet. Kapazitive Meßmethoden geben aber nur Auskunft über die Fadenmasse. Für die Qualität eines Garnes sind aber auch sein Aussehen und sein Durchmesser verantwortlich, die aber nur optisch überwacht werden können. Eine Beziehung und damit Vergleichsmöglichkeit zwischen beiden Meßmethoden besteht nicht.

Ein optisches Meßsystem, das nur auf die Überwachung des Durchmessers eines Fadens abgestellt ist, ist aus der EP-A-322 470 bekannt. Mit ihm ist es aber nicht möglich, andere Garnfehler festzustellen. Solche Fehler können beispielsweise in der Masse des Fadens oder bei einer ungleichmäßigen Mischung der Fasern auftreten, ohne daß sich das äußerlich. also optisch, bemerkbar macht. Fehler solcher Art lassen Rückschlüsse auf Unregelmäßigkeiten im Spinnbetrieb zu.

Für die Qualität eines Garnes wäre es deshalb wünschenswert, wenn es nach beiden Meßmethoden gleichzeitig überprüft werden könnte.

Aufgabe dieser Erfindung ist es deshalb, eine Meßvorrichtung vorzustellen, welche sowohl die optischen Meßwerte, also die Durchmesserwerte, als auch die kapazitiven Werte, also die Massewerte eines Fadens, ein und derselben Stelle des Fadens zuzuordnen erlaubt.

Die Lösung der Aufgabe erfolgt mit einer Vorrichtung gemäß Anspruch 1. Ansführungsformen der Erfindung sind Gegenstand der abhängigen Ansprüche 2 bis 7.

Aus der US-A-4,648,054 ist eine Vorrichtung zum Messen des Garndurchmessers und der Garndrehung bekannt. Das zu prüfende Garn läuft über zwei Umlenkrollen, wobei zwischen den beiden Umlenkrollen die Meßeinrichtung zur Feststellung der Garndrehung angeordnet ist. In Bewegungsrichtung des Fadens gesehen, hinter der zweiten Umlenkrolle, befindet sich eine Meßeinrichtung zur Überprüfung des Fadendurchmessers. Dabei durchläuft das Garn zunächst einen Kondensator zur kapazitiven Messung der Garndichte und, in Bewegungsrichtung des Garns gesehen dahinterliegend, einen optischen Sensor, der mittels der Verschattung einer Fotozelle den Garndurchmesser feststellt. In der Meßeinrichtung ist ein Referenzfaden aufgespannt. der sowohl von einem kapazitiven als auch von einem optischen Sensor abgetastet wird. Diese Meßeinrichtung liefert zwar einen Wert sowohl für die Dichte des Fadens als auch für den Fadendurchmesser, aber die beiden Meßwerte können nicht ein und derselben Stelle des Fadens zugeordnet werden.

Ist an einer Stelle des Fadens seine Dichte bekannt, ist es nicht möglich, dort seinen Durchmesser präzise festzustellen. Umgekehrt ist es nicht möglich, einem präzisen Durchmesserwert an einer Stelle eines Fadens die dortige Dichte zuzuordnen.

Eine einfache, platzsparende Vorrichtung, die es ermöglicht, sowohl die optischen als auch die kapazitiven Werte eines Fadens an ein und derselben Stelle während seines Durchlaufens durch den Fadenprüfer zu erhalten ergibt sich dadurch, daß m Meßschlitz der optoelektronischen Einrichtung ein Kondensatorbelag angeordnet ist, der mit einer kapazitiven Meßeinrichtung verbunden ist.

Wird in dem Meßschlitz einer optoelektronischen Einrichtung zur Messung der Unregelmäßigkeiten des Fadendurchmessers ein Kondensatorbelag angeordnet, ist es vorteilhaft möglich, sowohl eine kapazitive, die Masse bestimmende Messung als auch eine optische, den Durchmesser bestimmende Messung an ein und derselben Meßstelle durchzuführen. Dadurch entfällt eine erst mühsam vorzunehmende Zuordnung der Meßwerte zu einer bestimmten Fadenstelle, wenn die Messungen an verschiedenen Orten des Fadenwegs vorgenommen werden.

Die Anordnung des Kondensatorbelags kann im Strahlengang zwischen Lichtsender und Lichtempfänger, vor und hinter dem Faden, als durchsichtiger Kondensatorbelag erfolgen. Dadurch liegen die optoelektronische und die kapazitive Meßeinrichtung in einer Ebene. Außerdem erfolgt die Prüfung des Fadens in ein und derselben Richtung, so daß die Unregelmäßigkeiten des Fadens sowohl optisch als auch kapazitiv aus demselben Blickwinkel erfaßt werden. Möglich ist allerdings auch eine Anordnung des kapazitiven Belags un einem Winkel zum Strahlengang, beispielsweise rechtwinklig. Bei Einlegen eines Fadens in den Meßschlitz müßte dann ein Kondensatorbelag weggeschwenkt werden.

Damit der Kondensatorbelag das vom Lichtsender ausgesandte Licht nicht allzusehr schwächt und damit für die optoelektronische Fadenmessung Nachteile mit sich bringt, kann der Kondensatorbelag als Gitter im Strahlengang angeordnet sein. Ein Gitter ist, wenn es fein genug ist, genügend lichtdurchlässig und kann trotzdem die Funktion einer Kondensatorplatte übernehmen. Die Durchlässigkeit des Gitters, das heißt die Maschengröße sowie die Dicke der Fäden, kann optimal auf die Wellenlänge des vom Lichtsender ausgesandten Lichtes abgestimmt werden, so daß eine nur minimale Schwächung des Lichtes hervorgerufen wird. Die als Kondensator wirkende Gitterfläche kann auch aus einer Anordnung von parallelen Drähten bestehen. Wird von dem Lichtsensor kohärentes Licht ausgesandt, kann die Anordnung der Paralleldrähte so erfolgen, daß sie zur Schwingungsebene des Lichtes parallel liegen.

Eine weitere Möglichkeit, den Kondensatorbelag im Strahlengang anzuordnen, bietet sich darin, ihn als Belag auf die im Strahlengang vor und hinter dem Faden angeordneten Fenster aufzudampfen. Der Kondensatorbelag ist auf der dem Faden zugewandten Fensterseite aufgebracht. Bei dem Belag kann es sich um eine ganzflächige Bedampfung des Fensters handeln, wobei einerseits die Schichtdicke auf die für den Meßvorgang erforderliche Lichtdurchlässigkeit abgestimmt sein muß und andererseits die kapazitiven Änderungen mit genügender Genauigkeit erfaßt werden sollen.

Denkbar ist auch die Aufbringung eines Gitters aus Kondensatorbelag auf die Fenster oder die Anordnung paralleler Streifen von Kondensatorbelag auf den Fenstern.

Die Aufbringung eines Kondensatorbelags auf die im Strahlengang angeordneten Fenster ist im Hinblick auf die erforderlichen Platzverhältnisse von besonderem Vorteil. Der Einbau zusätzlicher Elemente in den Strahlengang zwischen Lichtsender und Lichtempfänger entfällt. Erforderlich ist nur ein Anschluß an den im Strahlengang befindlichen Fenstern, der eine leitende Verbindung mit dem Kondensatorbelag herstellt.

Als Kondensatorbelag lassen sich alle die Werkstoffe nutzen, die die Fähigkeit besitzen, elektrische Ladungen unter Einwirkung eines elektrischen Feldes aufzunehmen, zu speichern und abzugeben. Auszuscheiden sind solche Werkstoffe, bei denen das Bestrahlen mit Licht einen sogenannten Fotoeffekt auslöst. Ein solcher Effekt würde die Ermittlung eines kapazitiven Meßwerts unmöglich machen.

Die optoelektronische Einrichtung weist eine Referenzmeßstelle auf. An dieser Referenzmeßstelle sind Mittel zur identischen Verschattung des Lichtempfängers vorhanden, wie sie an der Meßstelle durch den Kondensatorbelag erfolgt. Um eine vergleichende Messung durchführen zu können, müssen an der Referenzmeßstelle dieselben Meßvoraussetzungen gegeben sein, wie an der Meßstelle selbst. Diese vergleichbaren Meßverhältnisse können leicht dadurch hergestellt werden, daß in den Strahlengang zur Referenzmeßstelle ein identischer Kondensatorbelag in derselben Anordnung wie an der Meßstelle eingesetzt wird.

Die gleichzeitige Erfassung optischer Meßwerte, die Aufschluß auf das Aussehen des Fadens geben sowie kapazitiver Meßwerte, die Aufschluß über die Masse des Fadens geben, ist nur dann sinnvoll, wenn diese beiden Meßwerte ein und derselben Fadenstelle zugeordnet werden können. Aus diesem Grunde ist die Textilmaschine mit einer Längenmesseinrichtung für den Faden ausgestattet. Solche Längenmeßeinrichtungen sind Stand der Technik und sind deshalb hier nicht näher beschrieben. Erfindungsgemäß sind aber Mittel zum Zuordnen der Meßwerte der optoelektronischen und der kapazitiven Meßeinrichtung zu den Meßwerten der Längemeßeinrichtung vorhanden. Dadurch wird es möglich, einer bestimmten Stelle des Fadens die jeweilige Dicke und die jeweilige Fadenmasse zuzuordnen.

In weiterer vorteilhafter Ausgestaltung der Erfindung ist die Textilmaschine mit einer Schneidvorrichtung für Fäden ausgestattet. Diese Schneidvorrichtung steht mit der optoelektronischen und mit der kapazitiven Meßeinrichtung in Verbindung. Bei einer Abweichung der Meßwerte der optoelektronischen und der kapazitiven Meßeinrichtung von den vorgegebenen Sollwerten wird die Schneideinrichtung betätigt. Dadurch ist gewährleistet, daß nur ein einwandfreier Faden, der sowohl im Aussehen als auch in seiner Fadenmasse den Anforderungen entspricht, hergestellt wird.

Um aus der Anzahl der durchgeführten Schnitte Rückschlüsse auf die Arbeitsleistung einer Spinnstelle oder Spulstelle und aus deren Zustand ziehen zu können, ist die Schneideinrichtung mit einer Zähleinrichtung für die die Schneideinrichtung betätigenden Impulse verbunden. Die Zähleinrichtung ist weiterhin mit zwei Speichern ausgestattet, welche die Schneidimpulse der optoelektronischen Meßeinrichtung und die der kapazitiven Meßeinrichtung jeweils getrennt abspeichert. Mit Hilfe einer an sich bekannten Codierung ist es außerdem möglich, die Spinnstelle festzustellen, die den Faden produziert hat.

Ist eine kombinierte optoelektronische und kapazitive Meßeinrichtung an einer Spinnstelle installiert, kann diese Spinnstelle kontinuierlich überwacht und die Entstehung von Garnfehlern bereits bei der Erzeugung des Fadens ausgeschaltet werden. Zyklisch auftretende Garnfehler die zu Moireeffekten führen, häufig ein Zeichen für verschmutzte Spinnstellen, können dadurch bereits bei der Entstehung erkannt und frühzeitig beseitigt werden.

Anhand von Ausführungsbeispielen soll die Erfindung näher erläutert werden.
- Fig. 1: zeigt eine Spulmaschine, an deren Spulstellen die erfindungsgemäße Vorrichtung installiert ist.
- Fig. 2: zeigt den Schnitt durch eine erfindungsgemäße Vorrichtung.
- Fig. 3: zeigt in einer Einzelheit im Strahlengang angeordnete Fenster mit einem aufgedampften kapazitiven Belag.
- Fig. 4: zeigt das Schaltbild der erfindungsgemäßen Vorrichtung.

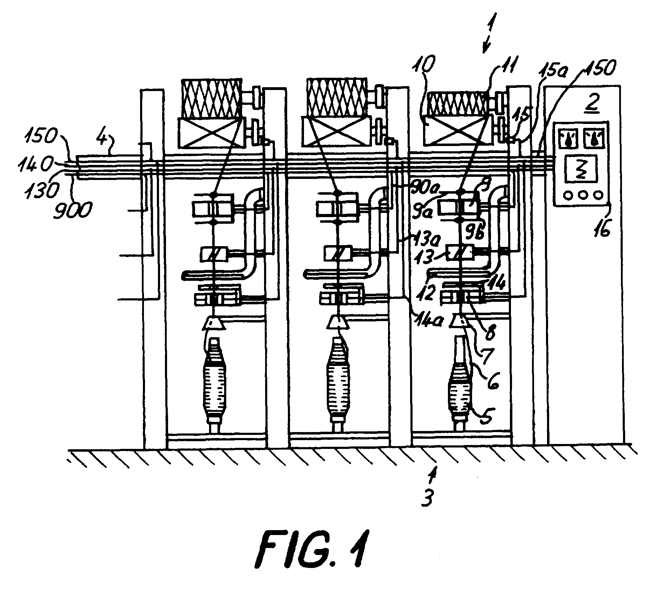

In Fig. 1 ist eine Spulmaschine dargestellt, an deren Spulstellen die erfindungsgemäße Vorrichtung eingesetzt wird. An der Spulmaschine 1 sind nur die Einrichtungen und Vorrichtungen dargestellt, die zum Verständnis der Erfindung wesentlich beitragen. Aus diesem Grund sind von der Spulmaschine 1 nur ein Endgestell 2 sowie mehrere Spulstellen 3 zu sehen. Die Spulstellen 3 sind nebeneinander angeordnet und hängen an einer Traverse 4, die von dem dargestellten Endgestell 2 zu einem hier nicht dargestellten Endgestell am anderen Ende der Maschine verläuft. Vorrichtungen, die den Zu- und Abtransport der Spinnspulen sowie der erzeugten Kreuzspulen betreffen, sind hier nicht dargestellt und beschrieben, da sie nicht zum Verständnis der Erfindung beitragen.

An den Spulstellen 3 werden Spinnspulen 5 abgespult. Von diesen in Ablaufposition befindlichen Spinnspulen verläuft der Faden 6 durch einen Ballonbrecher 7 über einen Fadenspanner 8 und einen Fadenprüfer 9, bei dem oberhalb und unterhalb Fadenführungsbleche 9 a beziehungsweise 9 b angeordnet sind, zur Fadenführungstrommel 10, welche den Faden in Kreuzlagen auf die Auflaufspule 11 auflegt. Die Auflaufspule heißt aus diesem Grund auch Kreuzspule.

Bei einer Unterbrechung des Fadenlaufs zwischen der Spinnspule 5, der Ablaufspule, sowie der Kreuzspule 11 legt ein Fadengreifer 12 die Enden des Fadens 6 in eine Spleißvorrichtung 13, wo der Fadenlauf durch Spleißen wiederhergestellt wird.

Wird durch den Fadenprüfer 9 eine nicht tolerierbare Unregelmäßigkeit im Faden festgestellt, wird eine Schneideinrichtung 14 oberhalb des Fadenspanners betätigt und der Faden 6 durchgetrennt. Das fehlerhafte Fadenstück wird mittels des Fadengreifers 12 von der Kreuzspule 11 heruntergeholt und anschließend aus dem Faden herausgetrennt. Danach wird mittels der Spleißvorrichtung 13 der Faden 6 gespleißt und der Fadenlauf wiederhergestellt.

An jeder der Spulstellen 3 ist auch eine Einrichtung zum Messen der Fadenlänge vorhanden. An der Fadenführungstrommel 10 ist ein Sensor 15 angebracht, der die Drehimpulse der Fadenführungstrommel 10 zählt. Diese Impulse werden über die Signalleitung 15 a, dann über eine Sammelleitung 150, die in der Traverse 4 verläuft, einer zentralen Steuereinrichtung 16 im Endgestell 2 zugeführt. In dieser zentralen Steuereinrichtung 16 werden die von den einzelnen Spulstellen gelieferten Signale der einzelnen Sensoren 15 aufaddiert und die jeweils an der entsprechenden Spulstelle gespulte Fadenlänge ermittelt.

Die Steuereinrichtung 16 empfängt darüberhinaus die Signale der Fadenprüfer 9. Diese Signale werden jeweils über die Signalleitung 90 a einer Sammelleitung 900 in der Traverse 4 übergeben und von dieser der Steuereinrichtung 16 zugeführt. Aufgrund der Signale der Fadenprüfer 9 wird bei fehlerhaftem Faden 6 die entsprechende Schneideinrichtung 14 betätigt. Die Signale dazu werden von einer Sammelleitung 140 über die Signalleitung 14 a der jeweils anzusteuernden Schneideinrichtung 14 zugeleitet. Die Wiederherstellung des Fadenlaufs nach Entfernung des Fadenfehlers erfolgt mittels der jeweiligen Spleißvorrichtung 13. Die Steuereinrichtung 16 gibt über die Sammelleitung 130 und die jeweilige Signalleitung 13 a das Signal zum Spleißen an die jeweilige Spleißvorrichtung ab.

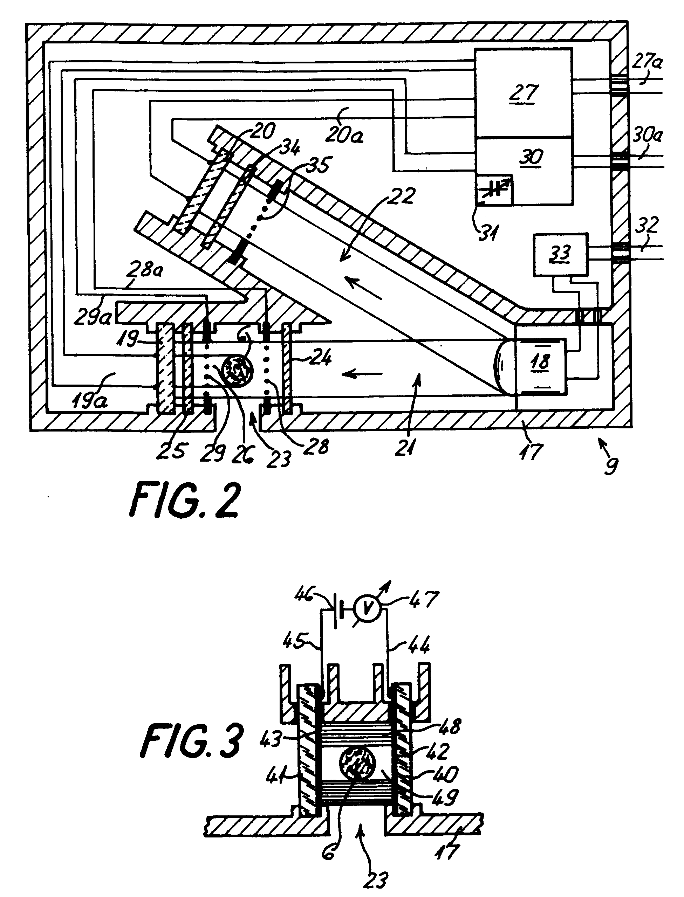

Fig. 2 zeigt einen Schnitt durch die erfindungsgemäße Vorrichtung zum Messen der Unregelmäßigkeiten des Durchmessers sowie der Masse von Fäden. Der Fadenprüfer 9 ist mit seinen wesentlichen Einzelheiten im Schnitt dargestellt. In einem lichtdichten Gehäuse 17 ist der Lichtsender 18 und der Lichtempfänger 19 untergebracht. Der Lichtsender 18 besteht im vorliegenden Ausführungsbeispiel aus einer Leuchtdiode, welche Infrarotlicht aussendet. Der Lichtempfänger 19 ist speziell auf die Wellenlänge des ausgesandten Infrarotlichts abgestimmt. Neben dem Lichtempfänger 19 ist ein weiterer, gleichgearteter Lichtempfänger 20 angeordnet. Durch eine Ausgestaltung des Gehäuses wird das von dem Lichtsender 18, von der Leuchtdiode, ausgesandte Licht in zwei gleich große und gleich starke Lichtstrahlen 21 und 22 aufgeteilt. Der Lichtstrahl 21 fällt auf den Lichtempfänger 19 und der Lichtstrahl 22 auf den zur Referenzmessung vorgesehenen Lichtempfänger 20. Die Lichtempfänger 19 und 20 sind speziell auf die von der Leuchtdiode ausgesandte Infrarotstrahlung eingestellte Fotodioden.

Der Lichtstrahl 21 dient zur Messung der Unregelmäßigkeiten des Durchmessers eines Fadens 6, der in den Lichtstrahl 21 eingebracht wird. Der Faden 6 wird durch einen Spalt 23 im Gehäuse 17 in den Lichtstrahl 21 geführt. Hier nicht dargestellte Fadenleitelemente halten den Faden 6 in seiner Position. Zum Schutz der Leuchtdiode 18 und der Fotodiode 19 ist der Spalt 23 jeweils durch Fenster 24 beziehungsweise 25 abgeschlossen. Die Durchlässigkeit des Fenstermaterials ist auf die von der Leuchtdiode ausgesandte Lichtstrahlung abgestimmt. Der Lichtstrahl 21 fällt von rechts kommend, in Pfeilrichtung gesehen, auf den Faden 6. Dadurch wirft er einen Schatten 26 auf die Fotodiode 19. Mit wechselndem Durchmesser des Fadens 6 wechselt auch der Durchmesser des Schattens 26 und dadurch der von der Fotodiode erzeugte Strom. Der in Abhängigkeit des Fadendurchmessers veränderliche Strom wird über die Signalleitung 19 a einem Differenzbildner und Verstärker 27 zugeführt. Dorthin wird auch der konstante Strom der Fotodiode 20 über die Signalleitung 20 a geleitet. Die beiden Stromsignale werden gegeneinander geschaltet und die Differenz bildet ein Maß für die Unregelmäßigkeit des Durchmessers des Fadens. Dieses Signal wird über die Signalleitung 27 a, die ein Strang der Signalleitung 90 a ist, der Steuereinrichtung 16 zugeleitet. Die hier beschriebene Meßeinrichtung bildet die optoelektronische Einrichtung zum Messen der Unregelmäßigkeiten des Durchmessers eines Fadens.

Um gleichzeitig die Masse eines Fadens bestimmen zu können, ist im Meßschlitz 23, im Lichtstrahl 21, in Strahlungsrichtung gesehen jeweils vor und hinter dem Faden ein Kondensatorbelag 28 beziehungsweise 29 angeordnet. Die Punktierung bedeutet, daß der Kondensatorbelag als Gitter in den Meßschlitz 23 eingesetzt ist, um den Lichtstrahl 21 möglichst wenig zu schwächen. Die im gleichen Abstand vom Faden 6 angeordneten Kondensatorbeläge bilden einen Plattenkondensator. Der Kondensatorbelag 28, die Kondensatorplatte 28, ist über eine Leitung 28 a mit einem Differenzbildner und Verstärker 30 verbunden. Ebenso ist die Kondensatorplatte 29 über ihre Leitung 29 a mit diesem Differenzbildner und Verstärker verbunden. In diesem Differenzbildner und Verstärker 30 wird ein Referenzsignal eines Kondensators 31 zur Vergleichsmessung herangezogen. Dieser Referenzkondensator 31 ist in den Differenzbildner und Verstärker 30 integriert. Das in Abhängigkeit von der Fadenmasse im Differenzbildner und Verstärker erzeugte Signal wird über die Signalleitung 30 a, welche ebenfalls ein Leitungsstrang der Signalleitung 90 a ist, der Steuereinrichtung 16 zur weiteren Auswertung zugeleitet.

Die Leuchtdiode 18 ist über die Leitung 32 an eine Spannungsquelle und die Steuereinrichtung 16 angeschlossen. In die Leitung 32 ist ein Vorwiderstand 33 geschaltet, mit dem die Leuchtdiode optimal eingestellt werden kann.

Da der von der Leuchtdiode 18 ausgehende Lichtstrahl 21 sowohl durch die Fenster 24 und 25 als auch durch den Kondensatorbelag 28 und 29 verschaltet wird, müssen vor der Fotodiode 20 dieselben Verschattungsverhältnisse wie an der messenden Fotodiode hergestellt werden. Als Mittel zur identischen Verschattung der Referenzmeßstelle dient ein Fenster 34, was die gleichen physikalischen Eigenschaften aufweist wie die beiden Fenster 24 und 25 im Lichtstrahl 21. Des weiteren ist im Lichtstrahl 22 ein Gitter 35 angeordnet, das dieselbe Verschattung der Fotodiode 20 zur Referenzmessung verursacht wie die beiden gitterartigen Kondensatorbeläge 28 und 29. Das Fenster 34 und das Gitter 35 können auswechselbar angeordnet sein, so daß bei einem Wechsel der Fenster und der Kondensatorbeläge 28 und 29 die Mittel zur identischen Verschattung des Lichtempfängers ausgewechselt werden können, um sie gegen solche auszutauschen, die den Fenstern und Kondensatorbelägen im Lichtstrahl 21 vergleichbar sind.

Fig. 3 zeigt eine weitere Auführungsform der kapazitiven Meßeinrichtung. Dargestellt ist hier nur ein Ausschnitt des Fadenprüfers. Dieser Ausschnitt umfaßt den Meßschlitz 23 mit dem darin befindlichen Fäden 6. Von dem Gehäuse 17 werden zwei Fenster 40 und 41 gehalten, die den Meßschlitz gegen Lichtsender und Lichtempfänger, die hier nicht dargestellt sind, abschließen. Im Gegensatz zum Ausführungsbeispiel nach Fig. 2 sind hier die Kondensatorbeläge direkt auf die Fenster aufgebracht. Auf dem Fenster 40 befindet sich auf der dem Faden zugewandten Seite ein Kondensatorbelag 42 uhd auf dem Fenster 41 befindet sich ebenfalls auf der dem Faden zugewandten Seite ein Kondensatorbelag 43. Die Kondensatorbeläge können auf die Fenster aufgedampft oder in einer anderen Form auf die Fenster aufgebracht worden sein. Zu beachten ist, daß die Lichtdurchlässigkeit der Fenster durch den aufgebrachten Kondensatorbelag nicht so weit geschwächt wird, daß eine optische Überwachung des Fadendurchmessers unmöglich wird. Andererseits müssen die Kondensatorbeläge so beschaffen sein, daß sie auswertbare kapazitive Meßsignale liefern können. Dazu kann der Kondensatorbelag in Form eines Gitters oder einer Linienanordnung auf die Fenster aufgedampft oder aufgeklebt werden. Die Kondensatorbeläge können auch im Material des Fensters integriert sein, beispielsweise in Form einer Beimischung. Im vorliegenden Ausführungsbeispiel sind die Fenster durch die innenliegende Stützkonstruktion des Gehäuses hindurchgeführt, so daß die Anschlüsse der Kondensatorbeläge, der Anschluß 44 des Kondensatorbelags 42 und der Anschluß 45 des Kondensatorbelags 43, außerhalb des Lichtstrahls der Leuchtdiode liegen. Mit 46 ist die Spannungsquelle symbolisiert und mit 47 ein Spannungsmesser. Die hier dargestellte elektrische Schaltung der beiden Kondensatorbeläge symbolisiert die Möglichkeit, die Änderung des elektrostatischen Feldes zwischen den Kondensatorplatten messen zu können.

Zwischen den beiden Kondensatorbelägen 42 und 43 baut sich aufgrund der anliegenden Spannung 46 ein elektrostatisches Feld 48 auf, wie durch die parallelen Linien symbolisiert wird. Dieses elektrostatische Feld ist aufgrund der parallelen Anordnung der Kondensatorplatten homogen. Dort, wo der Faden 6 sich befindet, wird das elektrostatische Feld gestört. Diese Störung 49 bewirkt die Unterbrechung der Feldlinien und damit die Schwächung des elektrostatischen Feldes, was auf dem Meßgerät 47 angezeigt wird. Ändert sich die Störung des elektrostatischen Feldes 49 aufgrund der Fadenmasse, ändert sich auch die Anzeige im Meßgerät 47.

Ein auf den Fenstern aufgebrachter Kondensatorbelag hat gegenüber dem getrennt im Meßschlitz angeordneten Kondensatorbelag den Vorteil, daß die Kondensatorbeläge so dünn wie möglicht gestaltet werden können. Außerdem ist ein geringerer Platz für den Einbau erforderlich.

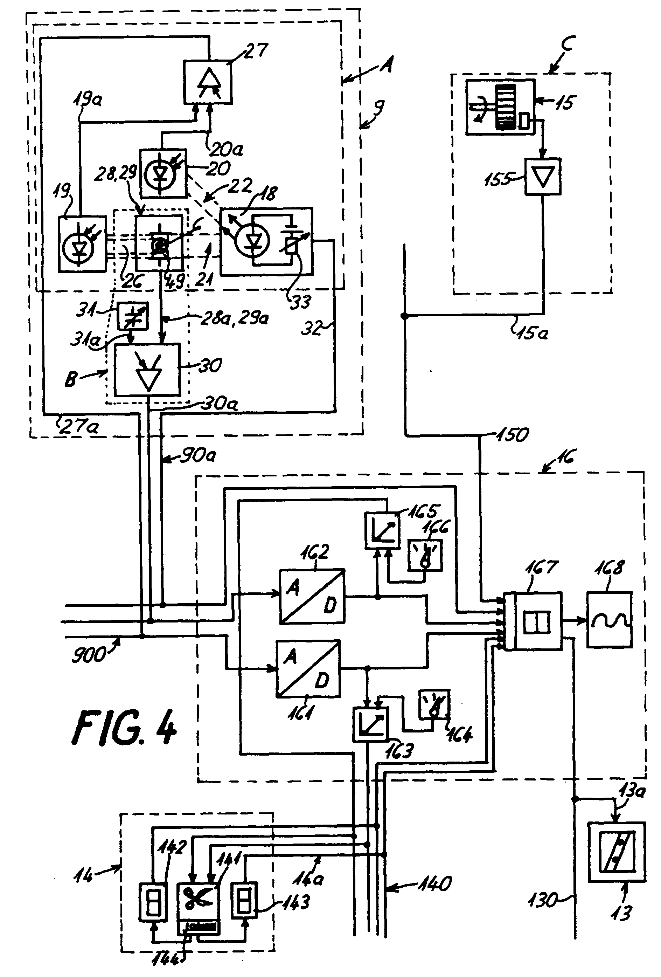

In Fig. 4 ist ein vereinfachter Schaltplan der erfindungsgemäßen Vorrichtung dargestellt. Die einzelnen Komponenten der Vorrichtung sind durch Symbole gekennzeichnet. Mit 9 ist der Fadenprüfer gekennzeichnet. Die optoelektronische Einrichtung zum Messen von Unregelmäßigkeiten des Durchmessers der Fäden ist durch die gestrichelt eingefaßten Symbole A gekennzeichnet. Die kapazitive Meßeinrichtung zur Feststellung der Fadenmasse umfaßt die punktiert eingerahmten Schaltsymbole B. Die Bezugsziffern an den Schaltsymbolen stimmen mit den Bezugsziffern der in Fig. 2 dargestellten Komponenten überein.

Die optoelektronische Meßeinrichtung umfaßt eine Fotodiode 18, die mittels einer Vorwiderstandes 33 auf die gewünschte Lichtemission eingestellt werden kann. Von ihr gehen die beiden Lichtstrahlen 21 und 22 aus. Im Lichtstrahl 21 liegt der Faden 6. Er wirft einen Schatten wechselnder Breite und Intensität auf die Fotodiode 19. Deren Signale werden über die Signalleitung 19 a an den Differenzverstärker 27 weitergeleitet. Dort treffen auch die Signale der Referenzdiode 20 über die Signalleitung 20 a ein. Sie wird von dem von der Leuchtdiode 18 ausgehenden Lichtstrahl 22 getroffen. Im Differenzverstärker 27 werden die beiden Signale gegeneinandergeschaltet und das abweichende Signal über die Signalleitung 27 a als Maß für die Durchmesserabweichung der Steuereinrichtung 16 gemeldet. Die kapazitive Meßeinrichtung B besteht aus den Kondensatorplatten 28 und 29. Die Störung 49 des elektrostatischen Feldes zwischen den beiden Kondensatorplatten 28 und 29 wird über die Siganlleitungen 28 a und 29 a an einen weiteren Differenzverstärker 30 gemeldet. Das Referenzsignal liefert einen Referenzkondensator 31 über eine Signalleitung 31 a. Das Differenzsignal des Differenzverstärkers 30 ist ein Maß für die Masseabweichung des Fadens von einer vorgegebenen Größe. Dieses Signal wird über die Signalleitung 30 a der Steuereinrichtung 16 zugeleitet. Die Signalleitung 27 a, 30 a und 32 sind Stränge der Signalleitung 90 a, die von der Spulstelle kommend in die zentrale Signalleitung 900 münden, die zur Steuereinrichtung 16 führt.

Um die kapazitiven und optoelektronischen Meßwerte einer bestimmten Stelle auf dem Faden zuordnen zu können, muß auch die Fadenlänge ständig gemessen und der Steuereinrichtung 16 gemeldet werden. Dieses erfolgt mittels der Längenmeßeinrichtung C an der entsprechenden Spulstelle. Die Längemeßeinrichtung C beinhaltet einen Sensor 15, der die Umdrehungen der Fadenführungstrommel 10 registriert. Die Signale werden in einem Verstärker 155 verstärkt und über die Signalleitung 15 a der Spulstelle an die zentrale Sammelleitung 150 weitergegeben, die zur Steuereinrichtung 16 führt.

In der Steuereinrichtung 16 werden die vom Fadenprüfer 9 ankommenden Signale den Signalen der Längenmeßeinrichtung zugeordnet, diese Daten werden gespeichert und als Meßprotokoll ausgegeben. Außerdem findet ein Soll-/Istwertvergleich hinsichtlich der Fadenmasse und der Fadendicke statt und bei Abweichungen von den vorgegebenen Werten wird eine Schneideinrichtung 14 an der entsprechenden Spulstelle betätigt, um das fehlerhafte Fadenstück aus dem Fadenlauf herauszunehmen. Zur Wiederherstellung der Fadenverbindung wird von der Steuereinrichtung 16 außerdem eine Spleißvorrichtung 13 betätigt.

Die von der optoelektronischen Meßeinrichtung A eintreffenden Signale durchlaufen zunächst einen Analog-Digitalwandler 161. Die digitalisierten Signale werden zum einen in einer Rechner- und Speichereinheit 167 den Signalen der Längenmeßeinrichtung zugeordnet. Zum anderen findet in dem Größt- und Kleinstwertbegrenzer 163 ein Soll/Istwertvergleich statt. Über die Einstellvorrichtung 164 können die Grenzwerte vorgegeben werden. Bei eventuellen Abweichungen von einer vorgegebenen Dicke wird über die Sammelleitung 140 die entsprechende Schneideinrichtung 14 an der entsprechenden Spulstelle über die Signalleitung 14 a aktiviert. Mit einer Schere 141 sind die zu betätigenden Schneidmesser an der entsprechenden Spulstelle bezeichnet. Ein aufgrund der Durchmesserabweichung eingetretener Schneidvorgang wird in dem der entsprechenden Schneideinrichtung zugeordneten Speicher 142 gespeichert und die gespeicherten Schneidimpulse an die Rechner-und Speichereinheit 167 zurückgemeldet.

Die Signale der kapazitiven Meßeinrichtung B zur Überwachung der Fadenmasse werden ebenfalls in einem Analog-Digitalwandler 162 digitalisiert. Danach erfolgt auch hier eine Aufspaltung der Signale. Einerseits werden sie ebenfalls der Rechner- und Speichereinheit 167 zugeführt, um dort mit den Signalen der optoelektronischen Einrichtung einem bestimmten Ort auf dem Faden zugeordnet zu werden. Andererseits werden die Signale auf ihre Abweichung von einem vorgegebenen Maximal- und Minimalwert untersucht. Dieser Vergleich findet in einem Größt- und Kleinstwertbegrenzer 165 statt, dessen Grenzwerte durch eine Einstellvorrichtung 166 vorgegeben werden. Bei einer Abweichung von den vorgegebenen Sollwerten wird ebenfalls die Schneideinrichtung 14 betätigt. Die Schneidimpulse aufgrund einer Masseabweichung werden ebenfalls in einen Speicher 143 in der Zähleinrichtung gezählt und im Speicher 143 abgespeichert. Auch diese Signale werden der Rechner- und Speichereinheit 167 zugeführt.

Die der Rechner- und Speichereinheit 167 zugeführten Signale ermöglichen ein kontinuierliches Fadenprotokoll. Jeder Stelle des Fadens ist die entsprechende Fadenmasse sowie der Fadendurchmesser zuordbar. Außerdem ist festellbar, an welcher Stelle der Faden geschnitten wurde, um Garnfehler zu beseitigen. Wenn ein Garnfehler beseitigt worden ist oder wenn ein Fadenbruch eingetreten ist, muß der Fadenlauf wiederhergestellt werden. Dieses erfolgt auf ein Signal der Rechner- und Speichereinheit 167 an der entsprechenden Spulstelle durch die dort installierte Spleißvorrichtung 13. Die Rechner- und Speichereinheit 167 setzt über die Signalleitung 130 sowie 13 a die Spleißvorrichtung 13 in Betrieb und registriert gleichzeitig die durchgeführten Spleißvorgänge. In einem Anzeigegerät 168 kann ein Protokoll angezeigt oder bei Bedarf ausgedruckt werden, das Auskunft über die Arbeit einer jeden Spulstelle gibt. Angezeigt werden können die Fadenlänge, wobei jeweils die Fadendicke und die Fadenmasse der entsprechenden Stelle auf dem Faden zuordbar sind. Außerdem werden die aufgrund der Abweichungen von der Fadenmasse oder dem Fadendurchmesser durchgeführten Schnitte und die zur Wiederherstellung der Fadenverbindung durchgeführten Spleißverbindungen registriert und angezeigt. Damit ist ein lückenloses Protokoll über jeden an einer bestimmten Spulstelle gespulten Faden und somit über jede der gespulten Spulen vorhanden und abrufbar. Aus den angezeigten Daten können Rückschlüsse aus der Arbeit der Spulstellen, über die Qualität des Garns und bei einer entsprechenden Codierung sogar Rückschlüsse aus der Arbeit der Spinnmaschine gezogen werden, von der die Spinnspulen stammten. Weiterhin ist es möglich, die kapazitiven Meßwerte bezüglich der Fadenmesse in Beziehung zu setzen zu den optoelektronischen Meßwerten, welche eine Auskunft geben über die Durchmesseränderung des Fadens während der Fadenreise.

## Patentansprüche

1. Vorrichtung zum Messen von Unregelmäßigkeiten der Fäden aus textilen Fasern an einer Textilmaschine mittels einer optoelektronischen Einrichtung, bei der ein zu prüfender Faden zwischen einem Lichtsender und Lichtempfänger in einem Meßschlitz angeordnet ist,
dadurch gekennzeichnet,
daß im Meßschlitz (23) ein Kondensatorbelag (28, 29) angeordnet ist, der mit einer kapazitiven Meßeinrichtung (B) verbunden ist, daß der Kondensatorbelag (28, 29) so angeordnet ist, daß ein und derselbe Teil des Fadens (6) sowohl von der optoelektronischen Einrichtung (A), als auch von der kapazitiven Meßeinrichtung (B) gleichzeitig prüfbar ist, daß die optoelektronische Einrichtung (A) eine Referenzmeßstelle (20) aufweist und daß an dieser Referenzmeßstelle (20) mindestens ein Kondensatorbelag (35) und mindestens ein Fenster (34) zur identischen Verschattung des Lichtempfängers (20) vorhanden sind, wie sie an der Meßstelle (19) durch den mindestens einen Kondensatorbelag (28, 29) und das mindestens eine Fenster (24) erfolgt.

2. Vorrichtung nach Anspruch 1, dadurch gekennzeichnet, daß der Kondensatorbelag (28, 29) im Strahlengang (21) zwischen Lichtsender (18) und Lichtempfänger (19), vor und hinter dem Faden (6), als durchsichtiger Kondensatorbelag angeordnet ist.

3. Vorrichtung nach Anspruch 1 oder 2, dadurch gekennzeichnet, daß der Kondensatorbelag (28, 29) als Gitter im Strahlengang (21) angeordnet ist.

4. Vorrichtung nach einem der Ansprüche 1 bis 3, dadurch gekennzeichnet, daß der Kondensatorbelag (42, 43) auf im Strahlengang (21) angeordneten Fenstern (40, 41) aufgebracht ist.

5. Vorrichtung nach einem der Ansprüche 1 bis 4, dadurch gekennzeichnet, daß die optoelektronische (A) und die kapazitive (B) Meßeinrichtung mit einer Längenmeßeinrichtung (C) für den Faden (6) verbunden sind und daß Mittel (167) zum Zuordnen der Meßwerte der optoelektronischen (A) und der kapazitiven (B) Meßeinrichtungen zu den Meßwerten der Längenmesseinrichtung (C) vorhanden sind, wodurch einer bestimmten Stelle des Fadens (6) die jeweilige Dicke und die jeweilige Fadenmasse zuzuordnen sind.

6. Vorrichtung nach einem der Ansprüche 1 bis 5, dadurch gekennzeichnet, daß die optoelektronische (A) und die kapazitive (B) Meßeinrichtung mit einer Schneideinrichtung (14) für den Faden (6) in Verbindung stehen und daß bei einer Abweichung der Meßwerte von den der optoelektronischen und/oder der kapazitiven Meßeinrichtung vorgegebenen Sollwerten die Schneideinrichtung (14) betätigt wird.

7. Vorrichtung nach Anspruch 6, dadurch gekennzeichnet, daß die Schneideinrichtung (14) mit einer Zähleinrichtung (144) für die die Schneideinrichtung betätigenden Impulse verbunden ist, daß die Zähleinrichtung (144) mit zwei Speichern (142, 143) ausgestattet ist und daß die Schneidimpulse der optoelektronischen Meßeinrichtung (A) in dem einen Speicher (142) und die Schneidimpulse der kapazitiven Meßeinrichtung (B) in dem anderen Speicher (143) abgespeichert werden und daß die beiden Speicher (142, 143) mit der Rechner- und Speichereinheit (167) der Steuereinrichtung (16) an der Textilmaschine (1) in Verbindung stehen.

## Claims

1. Apparatus for measuring irregularities in threads consisting of textile fibres on a textile machine, by means of an optoelectronic device in which a thread to be tested is disposed in a measuring slot between a light transmitter and a light receiver, characterised in that there is in the measuring slot (23) a capacitor lining (28, 29) which is connected to a capacitative measuring device (B) and in that the capacitor lining (28, 29) is so disposed that one and the same part of the thread (6) can be tested simultaneously by both the optoelectronic device (A) and also by the capacitative measuring device (B) and in that the optoelectronic device (A) has a reference measuring location (20) and in that at this reference measuring location (20) there is at least one capacitor lining (35) and at least one window (34) for identical shading of the light receiver (20) as occurs at the measuring location (19) by virtue of the at least one capacitor lining (28, 29) and the at least one window (24).

2. Apparatus according to Claim 1, characterised in that the capacitor lining (28, 29) is a transparent capacitor lining disposed in the beam (21) between the light transmitter (18) and the light receiver (19), in front of and behind the thread (6).

3. Apparatus according to Claim 1 or 2, characterised in that the capacitor lining (28, 29) is disposed as a grid in the beam (21).

4. Apparatus according to one of Claims 1 to 3, characterised in that the capacitor lining (42, 43) is applied to windows (40, 41) disposed in the beam (21).

5. Apparatus according to one of Claims 1 to 4, characterised in that the optoelectronic device (A) and the capacitative device (B) are connected to length measuring device (C) for the thread (6) and in that means (167) are provided for correlating the measured values obtained by the optoelectronic device (A) and the capacitative device (B) to the values measured by the length measuring device (C), so that the relevant thickness and the relevant thread mass can be related to a specific location in the thread (6).

6. Apparatus according to one of Claims 1 to 5, characterised in that the optoelectronic device (A) and the capacitative device (B) are connected to a cutting means (14) for the thread (6) and in that in the event of the measured values given by the optoelectronic and/or capacitative measuring devices deviating from preset desired values, the cutting device (14) is actuated.

7. Apparatus according to Claim 6, characterised in that the cutting device (14) is connected to a means (144) of counting the pulses which actuate the cutting device and in that the counting means (144) is equipped with two memories (142, 143) and in that the cutting pulses from the optoelectronic measuring device (A) are stored in one memory (142) while the cutting pulses from the capacitative measuring device (B) are stored in the other memory (143) and in that the two memories (142, 143) are connected to the computer and memory unit (167) of the control means (16) on the textile machine (1).

## Revendications

1. Appareil pour mesurer les irrégularités de fils en fibres textiles sur une machine textile au moyen d'un dispositif optoélectronique, dans lequel un fil à contrôler est disposé dans une fente de mesure entre un émetteur de lumière et un récepteur de lumière, caractérisé en ce qu'une armature de condensateur (28, 29) est disposée dans la fente de mesure (23) et est reliée à un dispositif de mesure capacitif (B), et que l'armature de condensateur (28, 29) est disposée de manière qu'une seule et même partie du fil (6) puisse être contrôlée simultanément à la fois par le dispositif optoélectronique (A) et par le dispositif de mesure capacitif (B), en ce que le dispositif optoélectronique (A) comporte un point de mesure de référence (20) et qu'au moins une armature de condensateur (35) et au moins une fenêtre (34) sont disposées à ce point de mesure de référence (20) pour ombrager le récepteur de lumière (20) de la même façon que l'une ou moins des armatures de condensateur (28, 29) et l'une au moins des fenêtres (24) ombragent le point de mesure (19).

2. Appareil selon la revendication 1, caractérisé en ce que l'armature de condensateur (28, 29) est disposée dans le parcours des rayons (21) entre l'émetteur de lumière (18) et le récepteur de lumière (19), devant et derrière le fil (6), sous la forme d'une armature de condensateur transparente.

3. Appareil selon la revendication 1 ou 2, caractérisé en ce que l'armature de condensateur (28, 29) est disposée sous la forme d'un réseau dans le parcours des rayons (21).

4. Appareil selon une des revendications 1 à 3, caractérisé en ce que l'armature de condensateur (42, 43) est appliquée sur des fenêtres (40, 41) disposées dans le parcours des rayons (21).

5. Appareil selon une des revendications 1 à 4, caractérisé en ce que le dispositif de mesure optoélectronique (A) et le dispositif de mesure capacitif (B) sont reliés à un dispositif (C) pour mesurer la longueur du fil (6) et que des moyens (167) sont prévus pour coordonner les valeurs mesurées par les dispositifs de mesure optoélectronique (A) et capacitif (B) aux valeurs mesurées par le dispositif de mesure de longueur (C), de sorte que l'épaisseur instantanée et la masse instantanée du fil peuvent être affectées à un point déterminé du fil (6).

6. Appareil selon une des revendications 1 à 5, caractérisé en ce que les dispositifs de mesure optoélectronique (A) et capacitif (B) sont en liaison avec un dispositif (14) pour couper le fil (6) et que ce dispositif de coupe (14) est actionné lorsque les valeurs mesurées par le dispositif de mesure optoélectronique et/ou le dispositif de mesure capacitif s'écartent de valeurs de consigne préfixées.

7. Appareil selon la revendication 6, caractérisé en ce que le dispositif de coupe (14) est relié à un dispositif (144) pour compter les impulsions actionnant le dispositif de coupe, que ce dispositif de comptage (144) est muni de deux mémoires (142, 143), que les impulsions de coupe du dispositif de mesure optoélectronique (A) sont enregistrées dans l'une (142) des mémoires et les impulsions de coupe du dispositif de mesure capacitif (B) sont enregistrées dans l'autre mémoire (143) et que les deux mémoires (142, 143) sont en liaison avec l'unité de calcul et de mémorisation (167) du système de commande (16) prévu sur la machine textile (1).
